# EUROPEAN PATENT SPECIFICATION

(11) **EP 4 310 532 B1**
(45) Date of publication and mention of the grant of the patent: **01.04.2026**
(21) Application number: 22186202.2
(22) Date of filing: 21.07.2022
(51) Int. Cl.: G01S 7/02

(54) **BLANKING SYSTEM AND METHOD**
AUSBLENDUNGSSYSTEM UND -VERFAHREN
SYSTÈME ET PROCÉDÉ DE DÉCOUPAGE

(43) Date of publication of application: 24.01.2024
(73) Proprietor: Rohde & Schwarz GmbH & Co. KG, 81671 München (DE)
(72) Inventor: Reinhardt, Alwin, Dr., 24229 Schwedeneck (DE); Schellens, Philipp, 85521 Ottobrunn (DE); Parigi, Alessandro, 81673 Munich (DE); Lex, Werner, 81475 Munich (DE)
(74) Representative: Novagraaf Group

(56) References cited:
- GB-A- 2 585 210
- US-A1- 2004 176 039
- US-A1- 2008 219 322
- US-B2- 7 620 120

## Description

### TECHNICAL FIELD OF THE INVENTION

The invention relates to a blanking system and a blanking method for a platform, such as a ship or an airplane, with RF signal reception and transmission capabilities.

### BACKGROUND OF THE INVENTION

Many mobile platforms, such as ships or airplanes, comprise highly precise receiver systems for receiving electromagnetic (EM) radiation, e.g. radar signals, from potentially unknown sources. An example for such receiver systems are electronic support measure (ESM) systems.

At the same time, these platforms typically comprise EM transmitters which emit strong transmission signals. However, these transmissions can interfere with the receiver systems.

For example, strong platform-generated EM transmission signals can cause saturation and/or compression products in the received signals. Furthermore, the processing capacity of the receiver systems can be overloaded by the EM transmission signals.

Thus, it is an objective to provide an improved blanking system and method for a platform, such as a ship or an airplane, which avoid the above mentioned disadvantages. In particular, it is an objective to reduce interfering effects of signal transmissions on received signals on the same platform.

### SUMMARY OF THE INVENTION

The object of the present invention is achieved by the solution provided in the enclosed independent claims. Advantageous implementations of the present invention are further defined in the dependent claims.

According to a first aspect, the invention relates to a blanking system for a platform, such as a ship or an aircraft, according to independent claim 1.

This achieves the advantage that a negative influence of the transmission signal on the reception of the RF signals can be efficiently minimized by using one or more blanking processes. In particular, the reception range of the receiver system in a time-frequency space, i.e. the duty cycle, can be unaffected or only minimally affected by the transmission signal due to the blanking process(es).

Hereby, "blanking" may refer to a suppression, a reduction and/or an avoidance of unwanted transmission signal components in the received RF signals. The blanking can, thus, be a "signal blanking" or an "RF blanking".

The receiver system can be an ESM (electronic support measures) system.

The influence of the transmission signal on the RF signal reception can be a negative influence, e.g. a reduced signal quality or S/N ratio of the received RF signals. The influence can be caused by an interference of (a) received RF signal(s) with the transmission signal. For instance, at the time of transmission, the transmission signal may partially overlap the RF signal(s) received by the antenna, i.e. the signal(s) received by the antenna may contain parts of the transmission signal.

The blanking unit can be configured to determine the influence of the transmission signal on the reception of the RF signals and select a suitable blanking process for reducing said influence. The blanking unit can be configured to determine said influence in real time.

The plurality of blanking processes may further comprise a first blanking process, in which the blanking unit (14) is configured to tune the receiver unit (13) to a reception frequency range that differs from a frequency range of the transmission signal and/or to a reception time that differs from a broadcasting time of the transmission signal and/or a fourth blanking process, in which the blanking unit (14) is configured to control the receiver unit (13) to blank and/or mark the received RF signals.

In particular, the first blanking process is the preferable blanking process which is carried out whenever possible. The second and/or third blanking process can be carried out if the first blanking process is not applicable or does not lead to an acceptable signal quality. The fourth blanking method can be carried out if none of the other blanking processes (alone or in combination) leads to an acceptable signal quality of the received RF signal(s) and/or if the other blanking processes are not feasible.

The blanking processes can also be combined, i.e. one, more or all blanking processes can be carried out at the same time. In particular, the second blanking process can be combined with the third blanking process.

The RF signals can be radar signals, e.g. millimeter wave signals. Each antenna segment of the antenna can be configured to receive radar signals in a predefined frequency range. The transmission signal can be a communication signal and/or a broadcast signal. The transmission signal can be another RF signal, in particular, in a similar frequency range than the received RF signals. For instance, the transmission signal is also a radar signal. The transmission signal and the RF signal can be formed by EM waves.

In an embodiment, the on-board emitter is configured to announce the upcoming transmission of the transmission signal by forwarding a message to the blanking unit prior to the transmission of the transmission signal, wherein said message comprises at least one of the following parameters of the on-board emitter and/or the transmission signal: operating mode, broadcast time, frequency, bandwidth, signal level, pulse width, pulse repetition time.

This achieves the advantage that the blanking unit can efficiently determine the influence of the upcoming transmission signal on the RF signal reception. Based on this determined influence, (a) suitable blanking process(es) can be chosen.

In an embodiment, the blanking unit is configured to carry out the first blanking process if the frequency range of the transmission signal is smaller than a threshold range and/or if a time until the broadcast of the transmission signal exceeds a threshold time value.

This achieves the advantage that a maximum duty cycle of the receiver system can be maintained. For instance, the threshold time value guarantees that the receiver system has enough time to tune to an unaffected frequency range in order to avoid the negative influence of the transmission on the RF signal reception. In particular, the "time until the broadcast" is a time span which ranges from the reception of the "announcement" of the transmission to the actual transmission, i.e. broadcast, of the transmission signal.

According to the invention, the blanking unit is configured to carry out the second blanking process if the transmission of the transmission signal does not cause a compression of the RF signals in a reception path of the receiver system.

In addition or alternatively, the blanking unit can be configured to carry out the second blanking process, if the first blanking process cannot be carried out, e.g., if the frequency range of the transmission signal is larger or equal to the threshold range and/or if the time until the broadcast of the transmission signal is shorter or equal to the threshold time value.

According to the invention, the blanking unit is configured to carry out the third blanking process if the transmission of the transmission signal causes a compression of the RF signals in a reception path of the receiver system.

In particular, the blanking unit can be configured to carry out the third blanking process if, in addition, the first blanking process cannot be carried out.

In an embodiment, the receiver unit comprises at least one filter and/or at least one attenuator; wherein, in the third blanking process, the blanking unit is configured to control the filter and/or the attenuator to remove portions of the transmission signal which are received together with the RF signals and/or to attenuate portions of the transmission signal which are received together with the RF signals, respectively.

In an embodiment, the blanking unit is configured to carry out the fourth blanking process if the transmission of the transmission signal causes a compression of the RF signals in a reception path of the receiver system even if an attenuation and/or a filtering of the received RF signals prior to the digitalization is carried out.

In other words, the fourth blanking process can be carried out if all reception paths of the receiver unit are compressed despite carrying out the third blanking process.

In an embodiment, the receiver system is configured not to further process RF signals which are blanked and/or marked.

In other words, the receiver system is configured to discard the blanked and/or marked RF signal.

In particular, in the fourth blanking process, the blanking unit is configured to blank and/or mark received RF signals which comprise components of the transmission signal. According to a second aspect, the invention relates to a blanking method according to claim 7.

This achieves the advantage that a negative influence of the transmission signal on the reception of the RF signals can be efficiently minimized by using one or more blanking processes. In particular, the reception range of a RF receiver system in a time-frequency space, i.e. the duty cycle, can be unaffected or only minimally affected by the transmission signal due to the blanking process(es).

The method can be carried out by a blanking system of a platform, such as a ship or an airplane, which comprises an on-board emitter for transmitting the transmission signal and a receiver system, e.g. an ESM system, for receiving the RF signals. In particular, the method can be carried out by the blanking system according to the first aspect of the invention.

In an embodiment, the step of announcing an upcoming transmission of a transmission signal comprises forwarding a message which comprises at least one of the following parameters of an emitter for emitting the transmission signal and/or the transmission signal: operating mode, broadcast time, frequency, bandwidth, signal level, pulse width, pulse repetition time.

In an embodiment, the first blanking process is carried out if the frequency range of the transmission signal is smaller than a threshold range and/or if the time until the broadcast of the transmission signal exceeds a threshold time value.

According to the invention, the second blanking process is carried out if the transmission of the transmission signal does not cause a compression of the RF signals.

According to the invention, the third blanking process is carried out if the transmission of the transmission signal causes a compression of the RF signals.

In an embodiment, the fourth blanking process is carried out if the transmission of the transmission signal causes a compression of the RF signals even if an attenuation and/or a filtering of the received RF signals prior to the digitalization is carried out.

In an embodiment, the blanked and/or marked RF signals are not further processed.

The above description with regard to the blanking system according to the first aspect of the invention is correspondingly valid for the blanking method according to the second aspect of the invention.

### BRIEF DESCRIPTION OF THE DRAWINGS

The invention will be explained in the following together with the figures.
- Fig. 1: shows a schematic diagram of a blanking system according to an embodiment;
- Fig. 2: shows a flow chart of a blanking method according to an embodiment; and
- Fig. 3: shows a flow chart of a blanking method according to an embodiment.

### DETAILED DESCRIPTION OF THE PREFERRED EMBODIMENTS

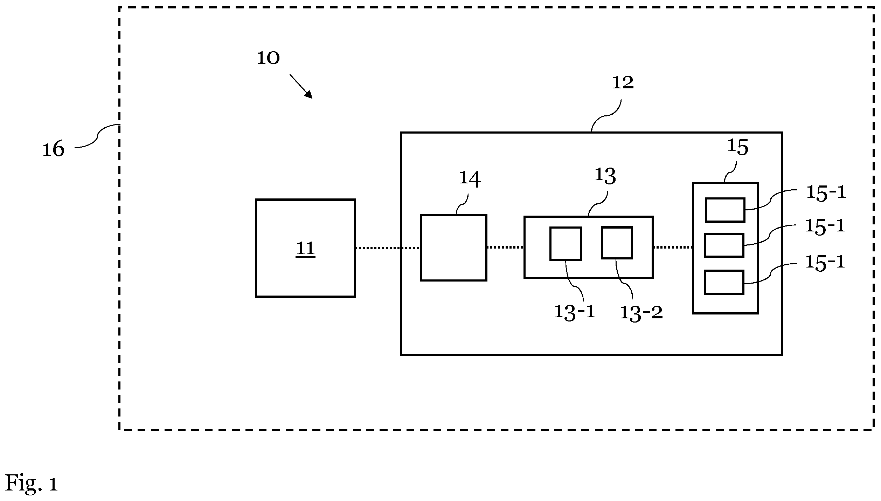

Fig. 1 shows a schematic diagram of a blanking system 10. The blanking system 10 can be installed on a platform 16, in particular, a mobile platform, such as a ship, an airplane, or an unmanned aerial vehicle (UAV).

The blanking system 10 comprises at least one on-board emitter (OBE) 11 configured to transmit transmission signals, and a receiver system 12. The receiver system 12 comprise at least one antenna 15, wherein the antenna 15 has at least one antenna segment 15-1 which is configured to receive radio frequency (RF) signals in a predefined frequency range, and at least one receiver unit 13 connected to the antenna 15, wherein the receiver unit 13 is configured to digitalize the RF signals received with the at least one antenna 15. The receiver system 12 further comprises at least one blanking unit 14.

The OBE 11 is configured to announce an upcoming transmission of a transmission signal to the blanking unit 14, and the blanking unit 14 is configured to determine an influence of said transmission of the transmission signal on the reception of the RF signals based on said announcement and/or based on a real-time analysis of the received RF signals. The blanking unit 14 is further configured to carry out one or more blanking processes out of a plurality of blanking processes in order to reduce said influence.

The plurality of blanking processes that can be carried out by the blanking unit 14 comprises at least two of: a first blanking process, in which the blanking unit 14 is configured to tune the receiver unit 13 to a reception frequency range that differs from a frequency range of the transmission signal and/or to a reception time that differs from a broadcasting time of the transmission signal; a second blanking process, in which the blanking unit 14 is configured to control the receiver unit 13 to filter the received RF signals after digitalization in order to remove portions of the transmission signal which are received together with the RF signals; a third blanking process, in which the blanking unit 14 is configured to control the receiver unit to attenuate and/or to filter the received RF signals prior to the digitalization in order to remove and/or attenuate portions of the transmission signal which are received together with the RF signals; and a fourth blanking process, in which the blanking unit 14 is configured to control the receiver unit to blank and/or mark the received RF signals, in particular if the received RF signals comprise components of the transmission signal.

The receiver system 12 can be an ESM (electronic support measures) system and/or an ELINT (electronic intelligence) system. The receiver system 12 can comprise a processing unit configured to further process, in particular analyze, the received RF signals. For instance, the RF signals are thereby compared to known signals stored in a data base to identify a source of the RF signals. The receiver system 12 may further comprise a direction finder configured to determine a direction in which a source of the received RF signals is located.

The at least one antenna 15 of the receiver system 12 can be a receiver antenna. The OBE 11 may comprise a transmission antenna for transmitting the transmission signal.

The received RF signals and the transmission signals can be RF signals within at least partially overlapping frequency ranges. For instance, both the received RF signals and the transmission signals can be radar signals, e.g. millimeter wave signals.

The receiver unit 13 can comprise an analog-to-digital converter (ADC) for digitalizing the RF signals received from the antenna 15.

The blanking unit 14 can be configured to determine the influence of the transmission signal on the reception of the RF signals and select a suitable blanking process for reducing said influence. The blanking unit 14 can comprise a processor (not shown) for determining said influence, preferably in real time. The processor of the blanking unit 14 can further be configured to carry out the blanking processes.

The blanking unit 14 can comprise a computer, a system, a human operator or any other form of intelligence inside the platform 16 or remote.

The OBE 11 can be configured to announce the upcoming transmission of the transmission signal by forwarding a message to the blanking unit 14 prior to the transmission of the transmission signal. The message may comprise at least one of the following signal parameters of the transmission signal: broadcast time, frequency, bandwidth, signal level, pulse width, pulse repetition time. In addition or alternatively, the message may comprise an operating mode of the OBE 11.

The OBE 11 can be configured to send the message in the form of a telegram, cover pulse or pre trigger. The OBE 11 can be connected to the receiver system 12, in particular to the blanking unit 14, via a communication line for forwarding said message.

The blanking unit 14 can be configured to determine the influence of the transmission signal transmission on the RF signal reception at least partially based on the information in the message. In addition or alternatively, the blanking unit 14 can have a-priori knowledge of the OBE 11, e.g. the emitted field strength of the OBE 11 transmissions, in particular, when being received at the antenna 15. The blanking unit 14 can further consider this a-priori knowledge when determining the influence of the OBE 11 transmission on RF signal reception.

The receiver unit 14 can comprise one or more RF sensors. When carrying out the first blanking process, the blanking unit 14 can control the RF sensors such that they evade the transmission signal in terms of time and/or frequency (OBE avoidance). This OBE avoidance does not lead to a loss in duty cycle because the receiving sensors are not affected.

The blanking unit 14 can be configured to carry out the first blanking process in case the frequency range of the transmission signal is smaller than a threshold range and/or in case the time until the broadcast of the transmission signal exceeds a threshold time value. For instance, if these conditions are fulfilled, the blanking unit 14 has enough time to tune the receiver unit 13 to an unaffected frequency range in order to avoid a negative influence of the OBE 11 transmission on the RF signal reception. Whether these conditions are fulfilled can be determined by the processor of the blanking unit 14, e.g. based on the information in the message from the OBE 11.

The blanking unit can be configured to carry out the second blanking process if the transmission of the transmission signal does not cause a compression of at least one reception path of the receiver system, in particular in the reception path of the RF signals received with one antenna segment.

Hereby, compression in a reception path may refer to an unwanted compression (or saturation), e.g. gain or pulse compression, of the received RF signals within one predefined reception frequency range of the receiver system 11 caused by interference with the transmission signal. In other words, compression may refer to the received RF signals comprising strong compression/saturation products caused by the transmission signal (which causes leaving a linear area of operation).

In particular, the second blanking process is only carried out alone (i.e., without other blanking processes) in case the transmission signal does not cause a compression of the RF signals.

The receiver unit 13 can comprise a digital filter unit. In the second blanking process, the blanking unit 14 can be configured to control the digital filter unit to remove portions of the transmission signal which were received together with the RF signals. This removal takes place in the digital domain (post processing).

The digital filtering, according to the second blanking process can be a filtering based on frequency, time bandwidth, pulse width and/or signal level (e.g., magnitude or field strength). The blanking unit 14 can receive this information from the OBE 11 message.

The blanking unit 14 can be configured to carry out the third blanking process if the transmission of the transmission signal causes a compression of the RF signals in a reception path of the receiver system, in particular in all reception paths of the receiver system 12 (e.g., despite carrying out post blanking).

Whether the transmission of the signal transmissions causes such a compression can again be determined by the blanking unit 14 based on information in the announcement of the upcoming transmission (OBE message).

The receiver unit 13 may comprise at least one filter 13-1 configured to block at least a portion of the transmission signal and/or at least one attenuator 13-2 configured to attenuate at least a portion of the transmission signal.

In the third blanking process, the blanking unit 14 can be configured to control the filter 13-1 to remove portions of the transmission signal which are received together with the RF signals. In addition or alternatively, the blanking unit 14 can be configured to control the attenuator 13-2 to attenuate portions of the transmission signal which are received together with the RF signals.

The filtering (HW-filtering) and/or the attenuation (HW-attenuation) of the analog RF signals can be combined with post blanking after digitalization of the signals.

The blanking unit 14 can be configured to carry out the fourth blanking process if the transmission of the transmission signal causes a compression of the RF signals in a reception path of the receiver system, in particular in all reception paths of the receiver system, even if an attenuation and/or a filtering of the received RF signals prior to the digitalization (according to the third blanking process) is carried out. In particular, the fourth blanking process is carried out if the negative influence of the OBE 11 transmission leads to compression even if applying all other blanking processes.

Preferably, the receiver system 12 is configured not to further process RF signals which are blanked and/or marked, i.e., to discard the blanked respectively marked signals.

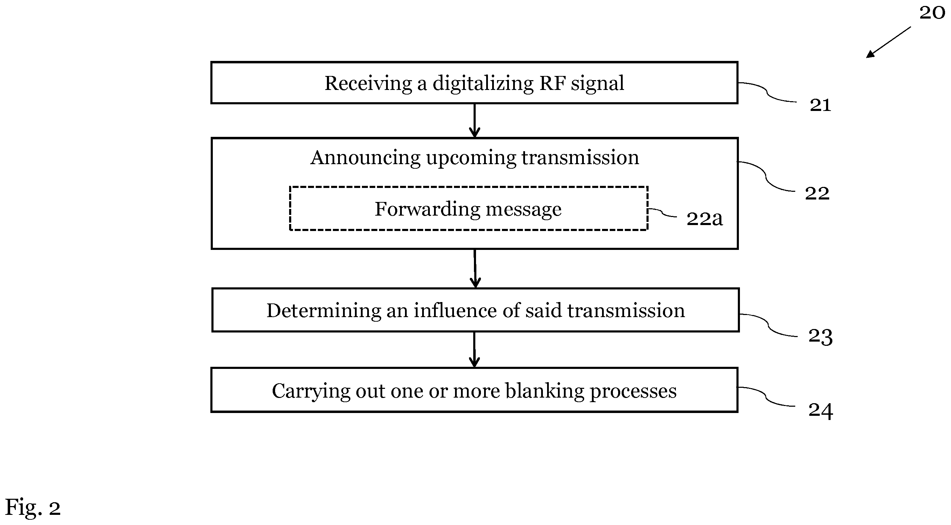

Fig. 2 shows a flow chart of a blanking method 20 according to an embodiment.

The method 20 comprises the steps of:
- receiving and digitalizing 21 RF signals in a predefined frequency range;
- announcing 22 an upcoming transmission of a transmission signal;
- determining 23 an influence of said transmission of the transmission signal on the reception of the RF signals based on said announcement and/or based on a real-time analysis of the received RF signals; and
- carrying out 24 one or more blanking processes out of a plurality of blanking processes in order to reduce said influence.

Thereby, the plurality of blanking processes that are carried out in step 24 comprises at least two of:
- a first blanking process, in which a receiver unit for receiving the RF signals is tuned to a reception frequency range that differs from a frequency range of the transmission signal and/or to a reception time that differs from a broadcasting time of the transmission signal;
- a second blanking process, in which the received RF signals are filtered after digitalization in order to remove portions of the transmission signal which are received together with the RF signals;
- a third blanking process, in which the received RF signals are attenuated and/or filtered prior to the digitalization in order to remove and/or attenuate portions of the transmission signal which are received together with the RF signals; and
- a fourth blanking process, in which the received RF signals are blanked and/or marked.

The step of announcing 22 an upcoming transmission of a transmission signal may comprise the further step 22a of: forwarding a message which comprises at least one of the following parameters of an emitter for emitting the transmission signal and/or the transmission signal: operating mode, broadcast time, frequency, bandwidth, signal level, pulse width, pulse repetition time.

The first blanking process can be carried out 24 if the frequency range of the transmission signal is smaller than a threshold range and/or if the time until the broadcast of the transmission signal exceeds a threshold time value.

The second blanking process can be carried out 24 if the transmission of the transmission signal does not cause a compression, in particular of the RF signals in a reception path of a receiver system for receiving the RF signals.

The third blanking process can be carried out 24 if the transmission of the transmission signal causes a compression, in particular of the RF signals in a reception path of the receiver system.

The fourth blanking process can be carried out 24 if the transmission of the transmission signal causes a compression, in particular of the RF signals in a reception path of the receiver system, even if an attenuation and/or a filtering of the received RF signals prior to the digitalization (according to the third blanking process) is carried out. For instance, the blanked and/or marked RF signals are not further processed.

The blanking method 20 can be carried out with a blanking system 10 as shown in Fig. 1. In particular, the step 21 of receiving and digitalizing of RF signals is carried out by a receiver system 12, e.g. an ESM system or an ELINT system, of a platform 16, e.g. a ship or an airplane. The transmission signal can be transmitted from an on-board emitter 11 on the same platform 16.

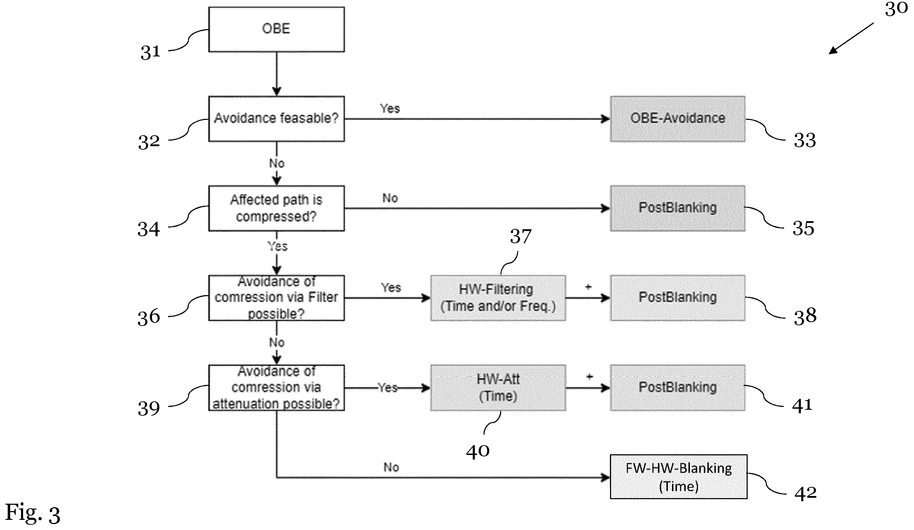

Fig. 3 shows a flow chart of a blanking method 30 according to an embodiment. In particular, the blanking method 30 shown in Fig. 3 comprises the four blanking processes that can be carried out during step 24 of the blanking method 20.

The blanking method 30 shown in Fig. 3 may further be carried out by the blanking unit 14 of the blanking system 10. In particular, the blanking method shown in Fig. 3 is a multistage process for selecting (a) suitable blanking process(es) in order to optimize a reception performance of the receiver system 12. In particular, (a) blanking process(es) is/are selected for the corresponding receive paths of the system which lead(s) to the least interference with the overall system.

The blanking method 30 thereby selects and/or combines several blanking processes depending on the influence of the OBE transmission 31 on the RF signal reception and/or other parameters:
In a first step 32 of the method 30, it can be determined if sensors of the receiver unit 13 can be controlled to avoid the transmission signal in terms of frequency and/or time. If it is determined that such an avoidance is feasible, the OBE avoidance 33 (i.e., the first blanking process) is carried out.

If OBE avoidance is not feasible, it can be determined in a further step 34 if the affected signal path of the receiver unit 13 is compressed, i.e., if it contains compression and/or saturation products. If the signal path is not compressed, the transmission signal can be removed from the received RF signals after digitalization by means of filtering based on, e.g., frequency, bandwidth, pulse width, signal level (post blanking 35). The necessary information for this decision can be obtained from the OBE 11 message to the blanking unit 14. This post blanking step 35 may correspond to the second blanking process. Besides the first blanking process, post blanking 35 is the process with the best duty cycle, since it can remove / mark the OBE transmission with high selectively without suppressing the reception of the usable RF signals.

If the affected path is compressed, it can be determined in a further step 36 if it is possible to avoid the compression by means of (analog) filtering. If it is determined that avoidance by filter is possible, a time and/or frequency selective filtering of the received RF signal can be carried out prior to digitalization (step 37). This filtering can be combined with a subsequent post blanking step 38 to further filter / mark the OBE transmission.

If an avoidance by filter is not possible (e.g., because no suitable filter is available), it can further be determined if an avoidance by attenuation is possible (step 39). If it is determined that avoidance by attenuation is possible, the (entire) reception path can be attenuated (step 40). In addition, a post blanking step 41 can be performed. The temporal and/or the frequency blanking/attenuation of a reception path by means of filtering (HW-filtering) and/or attenuation (HW-attenuation) and/or by means of temporal interruption of the electrical connection may correspond to the third blanking process.

If it is determined that it is not possible to avoid the compression in a reception path (e.g., because the attenuator is not sufficient or compression already occurred before), the transmission signal in the received RF signals can be blanked and/or marked subsequent to the digitalization (FW-HW-blanking 42). This step 42 may correspond to the fourth blanking process.

All features described above or features shown in the figures can be combined with each other in any advantageous manner within the scope of the invention.

## Claims

1. A blanking system (10) for a platform (16), such as a ship or an aircraft, comprising:
at least one on-board emitter (11) configured to transmit transmission signals; and
a receiver system (12), wherein the receiver system (12) comprises:
- at least one antenna (15), wherein the antenna has at least one antenna segment (15-1) which is configured to receive radio frequency, RF, signals in a predefined frequency range,
- at least one receiver unit (13) connected to the antenna (15), wherein the receiver unit (13) is configured to digitalize the RF signals received with the at least one antenna (15), and
- at least one blanking unit (14);
wherein the on-board emitter (11) is configured to announce an upcoming transmission of a transmission signal to the blanking unit (14);
wherein the blanking unit (14) is configured to determine an influence of said transmission of the transmission signal on the reception of the RF signals based on said announcement and/or based on a real-time analysis of the received RF signals;
wherein the blanking unit (14) is configured to carry out one or more blanking processes out of a plurality of blanking processes to reduce said influence, **characterized in that** the plurality of blanking processes comprises:
• a second blanking process, in which the blanking unit (14) is configured to control the receiver unit (13) to filter the received RF signals after digitalization to remove portions of the transmission signal which are received together with the RF signals; and
• a third blanking process, in which the blanking unit (14) is configured to control the receiver unit (13) to attenuate and/or to filter the received RF signals prior to the digitalization to remove and/or attenuate portions of the transmission signal which are received together with the RF signals;
wherein the blanking unit (14) is configured to carry out the second blanking process if the transmission of the transmission signal does not cause a compression of the RF signals in a reception path of the receiver system (12); and
wherein the blanking unit (14) is configured to carry out the third blanking process if the transmission of the transmission signal causes a compression of the RF signals in a reception path of the receiver system (12).

2. The blanking system (10) of claim 1,
wherein the on-board emitter (11) is configured to announce the upcoming transmission of the transmission signal by forwarding a message to the blanking unit (14) prior to the transmission of the transmission signal;
wherein said message comprises at least one of the following parameters of the on-board emitter (11) and/or the transmission signal: operating mode, broadcast time, frequency, bandwidth, signal level, pulse width, pulse repetition time.

3. The blanking system (10) of claim 1 or 2,
wherein the plurality of blanking processes further comprises a first blanking process, in which the blanking unit (14) is configured to tune the receiver unit (13) to a reception frequency range that differs from a frequency range of the transmission signal and/or to a reception time that differs from a broadcasting time of the transmission signal;
wherein the blanking unit (14) is configured to carry out the first blanking process if the frequency range of the transmission signal is smaller than a threshold range and/or if the time until the broadcast of the transmission signal exceeds a threshold time value.

4. The blanking system (10) of any one of the preceding claims,
wherein the receiver unit (13) comprises at least one filter (13-1) and/or at least one attenuator (13-2);
wherein, in the third blanking process, the blanking unit (14) is configured to control the filter and/or the attenuator to remove portions of the transmission signal which are received together with the RF signals and/or to attenuate portions of the transmission signal which are received together with the RF signals, respectively.

5. The blanking system (10) of any one of the preceding claims,
wherein the plurality of blanking processes further comprises a fourth blanking process, in which the blanking unit (14) is configured to control the receiver unit (13) to blank and/or mark the received RF signals;
wherein the blanking unit (14) is configured to carry out the fourth blanking process if the transmission of the transmission signal causes a compression of the RF signals in a reception path of the receiver system (12) even if an attenuation and/or a filtering of the received RF signals prior to the digitalization is carried out.

6. The blanking system (10) of any one of the preceding claims,
wherein the receiver system (12) is configured not to further process RF signals which are blanked and/or marked.

7. A blanking method (20), comprising:
- receiving and digitalizing (21) RF signals in a predefined frequency range;
- announcing (22) an upcoming transmission of a transmission signal;
- determining (23) an influence of said transmission of the transmission signal on the reception of the RF signals based on said announcement and/or based on a real-time analysis of the received RF signals;
- carrying out (24) one or more blanking processes out of a plurality of blanking processes to reduce said influence, **characterized in that** the plurality of blanking processes comprises:
• a second blanking process, in which the received RF signals are filtered after digitalization to remove portions of the transmission signal which are received together with the RF signals; and
• a third blanking process, in which the received RF signals are attenuated and/or filtered prior to the digitalization in order to remove and/or attenuate portions of the transmission signal which are received together with the RF signals;
wherein the second blanking process is carried out if the transmission of the transmission signal does not cause a compression of the RF signals; and
wherein the third blanking process is carried out if the transmission of the transmission signal causes a compression of the RF signals.

8. The blanking method (20) of claim 7,
wherein the step of announcing (22) an upcoming transmission of a transmission signal comprises forwarding (22a) a message which comprises at least one of the following parameters of an emitter (11) for emitting the transmission signal and/or the transmission signal: operating mode, broadcast time, frequency, bandwidth, signal level, pulse width, pulse repetition time.

9. The blanking method (20) of claim 7 or 8,
wherein the plurality of blanking processes further comprises a first blanking process, in which a receiver unit (13) for receiving the RF signals is tuned to a reception frequency range that differs from a frequency range of the transmission signal and/or to a reception time that differs from a broadcasting time of the transmission signal; and
wherein the first blanking process is carried out if the frequency range of the transmission signal is smaller than a threshold range and/or if the time until the broadcast of the transmission signal exceeds a threshold time value.

10. The blanking method (20) of any one of claims 7 to 9,
wherein the plurality of blanking processes further comprises a fourth blanking process, in which the received RF signals are blanked and/or marked;
wherein the fourth blanking process is carried out if the transmission of the transmission signal causes a compression of the RF signals even if an attenuation and/or a filtering of the received RF signals prior to the digitalization is carried out.

11. The blanking method (20) of any one of claims 7 to 10,
wherein the blanked and/or marked RF signals are not further processed.

## Patentansprüche

1. Austastungssystem (10) für eine Plattform (16), wie ein Schiff oder ein Luftfahrzeug, umfassend:
mindestens einen bordeigenen Emitter (11), der konfiguriert ist, um Übertragungssignale zu übertragen; und
ein Empfängersystem (12), wobei das Empfängersystem (12) umfasst:
- mindestens eine Antenne (15), wobei die Antenne mindestens ein Antennensegment (15-1), das konfiguriert ist, um Hochfrequenzsignale, HF-Signale, in einem vorgegebenen Frequenzbereich zu empfangen, aufweist,
- mindestens eine Empfängereinheit (13), die mit der Antenne (15) verbunden ist, wobei die Empfängereinheit (13) konfiguriert ist, um die HF-Signale, die mit der mindestens einen Antenne (15) empfangen werden, zu digitalisieren, und
- mindestens eine Austastungseinheit (14);
wobei der bordeigene Emitter (11) konfiguriert ist, um eine bevorstehende Übertragung eines Übertragungssignals der Austastungseinheit (14) anzukündigen;
wobei die Austastungseinheit (14) konfiguriert ist, um einen Einfluss der Übertragung des Übertragungssignals auf den Empfang der HF-Signale basierend auf der Ankündigung und/oder basierend auf einer Echtzeitanalyse der empfangenen HF-Signale zu bestimmen;
wobei die Austastungseinheit (14) konfiguriert ist, um einen oder mehrere Austastungsprozesse aus einer Vielzahl von Austastungsprozessen auszuführen, um den Einfluss zu reduzieren, **dadurch gekennzeichnet, dass** die Vielzahl von Austastungsprozessen umfasst:
• einen zweiten Austastungsprozess, wobei die Austastungseinheit (14) konfiguriert ist, um die Empfängereinheit (13) zu steuern, um die empfangenen HF-Signale nach einer Digitalisierung zu filtern, um Abschnitte des Übertragungssignals, die zusammen mit den HF-Signalen empfangen werden, zu entfernen; und
• einen dritten Austastungsprozess, wobei die Austastungseinheit (14) konfiguriert ist, um die Empfängereinheit (13) zu steuern, um die empfangenen HF-Signale vor der Digitalisierung zu dämpfen und/oder zu filtern, um Abschnitte des Übertragungssignals, die zusammen mit den HF-Signalen empfangen werden, zu entfernen und/oder zu dämpfen;
wobei die Austastungseinheit (14) konfiguriert ist, um den zweiten Austastungsprozess auszuführen, falls die Übertragung des Übertragungssignals keine Komprimierung der HF-Signale in einem Empfangspfad des Empfängersystems (12) bewirkt; und
wobei die Austastungseinheit (14) konfiguriert ist, um den dritten Austastungsprozess auszuführen, falls die Übertragung des Übertragungssignals eine Komprimierung der HF-Signale in einem Empfangspfad des Empfängersystems (12) bewirkt.

2. Austastungssystem (10) nach Anspruch 1,
wobei der bordeigene Emitter (11) konfiguriert ist, um die bevorstehende Übertragung des Übertragungssignals durch Weiterleiten einer Nachricht an die Austastungseinheit (14) vor der Übertragung des Übertragungssignals anzukündigen;
wobei die Nachricht mindestens einen der folgenden Parameter des bordeigenen Emitters (11) und/oder des Übertragungssignals umfasst: Betriebsmodus, Sendezeit, Frequenz, Bandbreite, Signalpegel, Pulsbreite, Pulswiederholungszeit.

3. Austastungssystem (10) nach Anspruch 1 oder 2,
wobei die Vielzahl von Austastungsprozessen ferner einen ersten Austastungsprozess umfasst, wobei die Austastungseinheit (14) konfiguriert ist, um die Empfängereinheit (13) auf einen Empfangsfrequenzbereich, der sich von einem Frequenzbereich des Übertragungssignals unterscheidet, und/oder auf eine Empfangszeit, die sich von einer Sendezeit des Übertragungssignals unterscheidet, abzustimmen;
wobei die Austastungseinheit (14) konfiguriert ist, um den ersten Austastungsprozess auszuführen, falls der Frequenzbereich des Übertragungssignals kleiner als ein Schwellenwertbereich ist und/oder falls die Zeit bis zu der Sendung des Übertragungssignals einen Schwellenzeitwert überschreitet.

4. Austastungssystem (10) nach einem der vorstehenden Ansprüche,
wobei die Empfängereinheit (13) mindestens einen Filter (13-1) und/oder mindestens ein Dämpfungsglied (13-2) umfasst;
wobei, in dem dritten Austastungsprozess, die Austastungseinheit (14) konfiguriert ist, um den Filter und/oder das Dämpfungsglied jeweils zu steuern, um Abschnitte des Übertragungssignals, die zusammen mit den HF-Signalen empfangen werden, zu entfernen, und/oder um Abschnitte des Übertragungssignals, die zusammen mit den HF-Signalen empfangen werden, zu dämpfen.

5. Austastungssystem (10) nach einem der vorstehenden Ansprüche,
wobei die Vielzahl von Austastungsprozessen ferner einen vierten Austastungsprozess, wobei die Austastungseinheit (14) konfiguriert ist, um die Empfängereinheit (13) zu steuern, um die empfangenen HF-Signale auszutasten und/oder zu markieren, umfasst;
wobei die Austastungseinheit (14) konfiguriert ist, um den vierten Austastungsprozess auszuführen, falls die Übertragung des Übertragungssignals eine Komprimierung der HF-Signale in einem Empfangspfad des Empfängersystems (12) bewirkt, auch falls eine Dämpfung und/oder eine Filterung der empfangenen HF-Signale vor der Digitalisierung ausgeführt wird.

6. Austastungssystem (10) nach einem der vorstehenden Ansprüche,
wobei das Empfängersystem (12) konfiguriert ist, um HF-Signale, die ausgetastet und/oder markiert sind, nicht weiter zu verarbeiten.

7. Austastungsverfahren (20), umfassend:
- Empfangen und Digitalisieren (21) von HF-Signalen in einem vorgegebenen Frequenzbereich;
- Ankündigen (22) einer bevorstehenden Übertragung eines Übertragungssignals;
- Bestimmen (23) eines Einflusses der Übertragung des Übertragungssignals auf den Empfang der HF-Signale basierend auf der Ankündigung und/oder basierend auf einer Echtzeitanalyse der empfangenen HF-Signale;
- Ausführen (24) eines oder mehrerer Austastungsprozesse aus einer Vielzahl von Austastungsprozessen, um den Einfluss zu reduzieren,
**dadurch gekennzeichnet, dass** die Vielzahl von Austastungsprozessen umfasst:
• einen zweiten Austastungsprozess, wobei die empfangenen HF-Signale nach der Digitalisierung gefiltert werden, um Abschnitte des Übertragungssignals, die zusammen mit den HF-Signalen empfangen werden, zu entfernen; und
• einen dritten Austastungsprozess, wobei die empfangenen HF-Signale vor der Digitalisierung gedämpft und/oder gefiltert werden, um Abschnitte des Übertragungssignals, die zusammen mit den HF-Signalen empfangen werden, zu entfernen und/oder zu dämpfen;
wobei der zweite Austastungsprozess ausgeführt wird, falls die Übertragung des Übertragungssignals keine Komprimierung der HF-Signale bewirkt; und
wobei der dritte Austastungsprozess ausgeführt wird, falls die Übertragung des Übertragungssignals eine Komprimierung der HF-Signale bewirkt.

8. Austastungsverfahren (20) nach Anspruch 7,
wobei der Schritt des Ankündigens (22) einer bevorstehenden Übertragung eines Übertragungssignals das Weiterleiten (22a) einer Nachricht umfasst, die mindestens einen der folgenden Parameter eines Emitters (11) zum Emittieren des Übertragungssignals und/oder des Übertragungssignals umfasst: Betriebsmodus, Sendezeit, Frequenz, Bandbreite, Signalpegel, Pulsbreite, Pulswiederholungszeit.

9. Austastungsverfahren (20) nach Anspruch 7 oder 8,
wobei die Vielzahl von Austastungsprozessen ferner einen ersten Austastungsprozess umfasst, wobei eine Empfängereinheit (13) zum Empfangen der HF-Signale auf einen Empfangsfrequenzbereich, der sich von einem Frequenzbereich des Übertragungssignals unterscheidet, und/oder auf eine Empfangszeit, die sich von einer Sendezeit des Übertragungssignals unterscheidet, abgestimmt wird; und
wobei der erste Austastungsprozess ausgeführt wird, falls der Frequenzbereich des Übertragungssignals kleiner als ein Schwellenwertbereich ist und/oder falls die Zeit bis zu der Sendung des Übertragungssignals einen Schwellenzeitwert überschreitet.

10. Austastungsverfahren (20) nach einem der Ansprüche 7 bis 9,
wobei die Vielzahl von Austastungsprozessen ferner einen vierten Austastungsprozess umfasst, wobei die empfangenen HF-Signale ausgetastet und/oder markiert werden;
wobei der vierte Austastungsprozess ausgeführt wird, falls die Übertragung des Übertragungssignals eine Komprimierung der HF-Signale bewirkt, auch falls eine Dämpfung und/oder eine Filterung der empfangenen **HF-**Signale vor der Digitalisierung ausgeführt wird.

11. Austastungsverfahren (20) nach einem der Ansprüche 7 bis 10,
wobei die ausgetasteten und/oder markierten HF-Signale nicht weiter verarbeitet werden.

## Revendications

1. Système de blocage (10) pour une plate-forme (16), telle qu'un navire ou un aéronef, comprenant :
au moins un émetteur embarqué (11) configuré pour transmettre des signaux de transmission ; et
un système récepteur (12), dans lequel le système récepteur (12) comprend :
- au moins une antenne (15), dans lequel l'antenne a au moins un segment d'antenne (15-1) qui est configuré pour recevoir des signaux radiofréquence, RF, dans une plage de fréquences prédéfinie,
- au moins une unité réceptrice (13) connectée à l'antenne (15), dans lequel l'unité réceptrice (13) est configurée pour numériser les signaux RF reçus avec l'au moins une antenne (15), et
- au moins une unité de blocage (14) ;
dans lequel l'émetteur embarqué (11) est configuré pour annoncer une transmission à venir d'un signal de transmission à l'unité de blocage (14) ;
dans lequel l'unité de blocage (14) est configurée pour déterminer une influence de ladite transmission du signal de transmission sur la réception des signaux RF en fonction de ladite annonce et/ou en fonction d'une analyse en temps réel des signaux RF reçus ;
dans lequel l'unité de blocage (14) est configurée pour mettre en œuvre un ou plusieurs processus de blocage parmi une pluralité de procédés de blocage pour réduire ladite influence, **caractérisé en ce que** la pluralité de procédés de blocage comprend :
• un deuxième processus de blocage, dans lequel l'unité de blocage (14) est configurée pour commander l'unité réceptrice (13) pour filtrer les signaux RF reçus après numérisation afin d'éliminer des parties du signal de transmission qui sont reçues conjointement avec les signaux RF ; et
• un troisième processus de blocage, dans lequel l'unité de blocage (14) est configurée pour commander l'unité réceptrice (13) pour atténuer et/ou pour filtrer les signaux RF reçus avant la numérisation afin d'éliminer et/ou atténuer des parties du signal de transmission qui sont reçues conjointement avec les signaux RF ;
dans lequel l'unité de blocage (14) est configurée pour mettre en œuvre le deuxième processus de blocage si la transmission du signal de transmission ne provoque pas de compression des signaux RF dans un chemin de réception du système récepteur (12) ; et
dans lequel l'unité de blocage (14) est configurée pour mettre en œuvre le troisième processus de blocage si la transmission du signal de transmission provoque une compression des signaux RF dans un chemin de réception du système récepteur (12).

2. Système de blocage (10) selon la revendication 1,
dans lequel l'émetteur embarqué (11) est configuré pour annoncer la transmission à venir du signal de transmission en transférant un message à l'unité de blocage (14) avant la transmission du signal de transmission ;
dans lequel ledit message comprend au moins l'un parmi les paramètres suivants de l'émetteur embarqué (11) et/ou du signal d'émission : mode de fonctionnement, temps de diffusion, fréquence, largeur de bande, niveau de signal, largeur d'impulsion, temps de répétition des impulsions.

3. Système de blocage (10) selon la revendication 1 ou 2,
dans lequel la pluralité de processus de blocage comprend en outre un premier processus de blocage, dans lequel l'unité de blocage (14) est configurée pour accorder l'unité réceptrice (13) à une plage de fréquences de réception qui diffère d'une plage de fréquences du signal de transmission et/ou à un temps de réception qui diffère d'un temps de diffusion du signal de transmission ;
dans lequel l'unité de blocage (14) est configurée pour mettre en œuvre le premier processus de blocage si la plage de fréquences du signal de transmission est inférieure à une plage seuil et/ou si le temps écoulé jusqu'à la diffusion du signal de transmission dépasse une valeur temporelle seuil.

4. Système de blocage (10) selon l'une quelconque des revendications précédentes,
dans lequel l'unité réceptrice (13) comprend au moins un filtre (13-1) et/ou au moins un atténuateur (13-2) ;
dans lequel, dans le troisième processus de blocage, l'unité de blocage (14) est configurée pour commander le filtre et/ou l'atténuateur pour éliminer des parties du signal de transmission qui sont reçues conjointement avec les signaux RF et/ou pour atténuer des parties du signal de transmission qui sont reçues conjointement avec les signaux RF, respectivement.

5. Système de blocage (10) selon l'une quelconque des revendications précédentes,
dans lequel la pluralité de processus de blocage comprend en outre un quatrième processus de blocage, dans lequel l'unité de blocage (14) est configurée pour commander l'unité réceptrice (13) pour bloquer et/ou marquer les signaux RF reçus ;
dans lequel l'unité de blocage (14) est configurée pour mettre en œuvre le quatrième processus de blocage si la transmission du signal de transmission provoque une compression des signaux RF dans un chemin de réception du système récepteur (12) même si une atténuation et/ou un filtrage des signaux RF reçus avant la numérisation est mis(e) en œuvre.

6. Système de blocage (10) selon l'une quelconque des revendications précédentes,
dans lequel le système récepteur (12) est configuré pour ne pas traiter davantage les signaux RF qui sont bloqués et/ou marqués.

7. Procédé de blocage (20), comprenant :
- la réception et la numérisation (21) de signaux RF dans une plage de fréquences prédéfinie ;
- l'annonce (22) d'une transmission à venir d'un signal de transmission ;
- la détermination (23) d'une influence de ladite transmission du signal de transmission sur la réception des signaux RF en fonction de ladite annonce et/ou en fonction d'une analyse en temps réel des signaux RF reçus ;
- la mise en œuvre (24) d'un ou plusieurs processus de blocage parmi une pluralité de procédés de blocage pour réduire ladite influence,
**caractérisé en ce que** la pluralité de processus de blocage comprend :
• un deuxième processus de blocage, dans lequel les signaux RF reçus sont filtrés après numérisation pour éliminer des parties du signal de transmission qui sont reçues conjointement avec les signaux RF ; et
• un troisième processus de blocage, dans lequel les signaux RF reçus sont atténués et/ou filtrés avant la numérisation afin d'éliminer et/ou d'atténuer des parties du signal de transmission qui sont reçues conjointement avec les signaux RF ;
dans lequel le deuxième processus de blocage est mis en œuvre si la transmission du signal de transmission ne provoque pas de compression des signaux RF ; et
dans lequel le troisième processus de blocage est mis en œuvre si la transmission du signal de transmission provoque une compression des signaux RF.

8. Procédé de blocage (20) selon la revendication 7,
dans lequel l'étape d'annonce (22) d'une transmission à venir d'un signal de transmission comprend le transfert (22a) d'un message qui comprend au moins l'un parmi les paramètres suivants d'un émetteur (11) pour émettre le signal de transmission et/ou du signal de transmission : mode de fonctionnement, temps de diffusion, fréquence, largeur de bande, niveau de signal, largeur d'impulsion, temps de répétition des impulsions.

9. Procédé de blocage (20) selon la revendication 7 ou 8,
dans lequel la pluralité de processus de blocage comprend en outre un premier processus de blocage, dans lequel une unité réceptrice (13) pour recevoir les signaux RF est accordée à une plage de fréquences de réception qui diffère d'une plage de fréquences du signal de transmission et/ou à un temps de réception qui diffère d'un temps de diffusion du signal de transmission ; et
dans lequel le premier processus de blocage est mis en œuvre si la plage de fréquences du signal de transmission est inférieure à une plage seuil et/ou si le temps écoulé jusqu'à la diffusion du signal de transmission dépasse une valeur temporelle seuil.

10. Procédé de blocage (20) selon l'une quelconque des revendications 7 à 9,
dans lequel la pluralité de processus de blocage comprend en outre un quatrième processus de blocage, dans lequel les signaux RF reçus sont bloqués et/ou marqués ;
dans lequel le quatrième processus de blocage est mis en œuvre si la transmission du signal de transmission provoque une compression des signaux RF même si une atténuation et/ou un filtrage des signaux RF reçus avant la numérisation est mis(e) en œuvre.

11. Procédé de blocage (20) selon l'une quelconque des revendications 7 à 10,
dans lequel les signaux RF bloqués et/ou marqués ne sont pas traités davantage.
